# EUROPEAN PATENT SPECIFICATION

(11) **EP 2 565 323 B1**
(45) Date of publication and mention of the grant of the patent: **19.12.2018**
(21) Application number: 11775298.0
(22) Date of filing: 28.04.2011
(51) Int. Cl.: D06F 58/28, D06F 58/04, D06F 58/20, F04B 49/03

(54) **METHOD FOR CONTROLLING THE OPERATION OF A DRYER**
VERFAHREN ZUR STEUERUNG DES BETRIEBS EINES TROCKNERS
PROCÉDÉ DE COMMANDE DU FONCTIONNEMENT D'UN SÉCHOIR

(30) Priority: 04.05.2010 KR 20100041999; 28.04.2010 KR 20100039373; 28.04.2010 KR 20100039372; 28.04.2010 KR 20100039371
(43) Date of publication of application: 06.03.2013
(73) Proprietor: LG Electronics Inc., Yeongdeungpo-gu Seoul, 07336 (KR)
(72) Inventor: LEE, Yongju, Changwon-si Gyeongnam 641-110 (KR); LEE, Sangik, Changwon-si Gyeongnam 641-110 (KR); NOH, Hyunwoo, Changwon-si Gyeongnam 641-110 (KR)
(74) Representative: Ter Meer Steinmeister & Partner
(86) International application number: PCT/KR2011/003171
(87) International publication number: WO 2011/136593

(56) References cited:
- EP-A2- 2 053 911
- WO-A1-2005/100883
- WO-A1-2010/010414
- JP-A- 2006 116 066
- JP-A- 2006 116 066
- JP-A- 2008 229 151
- JP-A- 2008 229 151
- JP-A- 2009 273 488
- US-A1- 2009 090 118

## Description

### [Technical Field]

The present invention relates to a control method of a dryer.

### [Background Art]

Washing apparatuses may be classified into washers for washing laundry, dryers for removing moisture, and machines combining both washing and drying. A dryer is an apparatus that dries an object by supplying heated dry air. A variety of dryers have been developed. However, it is known that these dryers have many different problems.
JP 2009 273488 A discloses a washing/drying machine. The machine has a variable speed compressor, an expansion valve and a control unit. When a drying step is started, the control unit increases the rotational speed of the compressor gradually in predetermined time steps (e.g., 1Hz per second).
WO 2005/100883 A1 discloses a noise control method involving a reducing of the operating speed of a compressor.

### [Disclosure]

### [Technical Problem]

An object of the present invention devised to solve the problem lies in a control method which enables stable operation of a compressor during initial driving of a heat pump. That is, it is an object of the present invention to provide a control method capable of preventing liquid phase refrigerant from being introduced into a compressor during initial driving of the compressor. It is another object of the present invention to provide a control method capable of preventing overheating of a compressor by controlling the quantity of refrigerant based on temperature information related to the compressor.

It is another object of the present invention to provide a control method capable of reducing noise and vibration of a dryer. To this end, it is a further object of the present invention to provide a control method capable of reducing noise and vibration generated from a variable compressor by adjusting the driving speed of the compressor.

### [Technical Solution]

The above objects of the present invention are solved by the features of the independent claims. The present invention provides a control method of a dryer, the dryer including a heat pump having a variable compressor, the method preferably including selecting at least one dryer operating course for supplying air or dry air, raising the driving speed of the compressor to a target speed while the selected dryer operating course is proceeding, and adjusting the degree of opening of an expansion valve of the heat pump.

In accordance with another aspect of the present invention, there is provided a dryer preferably including a user operating unit configured to receive at least one piece of drying information, a controller configured to receive the drying information input via the user operating unit and generate an operating signal, and a heat pump configured to be driven upon receiving the operating signal from the controller, the heat pump including a compressor and an expansion valve, wherein the driving speed of the compressor is raised to a preset target speed for a first time zone in response to the operating signal, and wherein the degree of opening of the expansion valve is adjusted for a second time zone consecutive to the first time zone in response to the operating signal.

### [Advantageous Effects]

As described above, a control method according to the present invention is capable of ensuring stable operation of a compressor by preventing liquid phase refrigerant from being introduced into the compressor during initial driving of the compressor.

Further, according to the present invention, it is possible to prevent overheating of the compressor by controlling the quantity of refrigerant based on temperature information related to the compressor.

Furthermore, the control method according to the present invention is capable of reducing noise and vibration generated from the variable compressor by adjusting the driving speed of the compressor.

### [Description of Drawings]

FIG. 1 is a perspective view illustrating the internal configuration of a dryer according to an embodiment,
FIG. 2 is a perspective view illustrating only a heat pump of FIG. 1,
FIGs. 3 to 6 are diagrammatic views illustrating the configuration of the dryer having the heat pump according to different embodiments,
FIGs. 7 and 8 are views illustrating the configuration of the heat pump according to different embodiments,
FIGs. 9 and 10 are graphs illustrating variation in the driving speed of a compressor in a control method according to an embodiment,
FIG. 11 is a graph illustrating variation in the degree of opening of an expansion valve in the control method according to the embodiment,
FIG. 12 is a flowchart illustrating a control method of a dryer according to another embodiment,
FIG. 13 is a graph illustrating a relationship between a driving time zone and a low noise time zone of the compressor of FIG. 12, and
FIG. 14 is a graph illustrating noise depending on the driving speed of the compressor.

### Best Mode

Reference will now be made in detail to a dryer according to various embodiments of the present invention, examples of which are illustrated in the accompanying drawings.

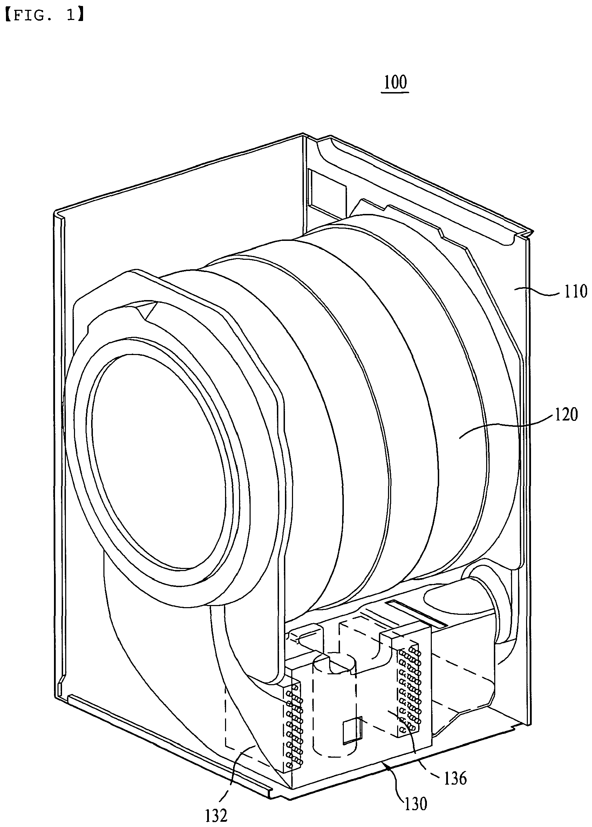

FIG. 1 is a perspective view illustrating a dryer according to an embodiment.

Referring to FIG. 1, the dryer 100 according to the embodiment may include a cabinet 110 defining the external appearance of the dryer. The dryer 100 may further include a drum 120 that is installed within the cabinet 110 so as to be selectively rotatable. The drum 120 may accommodate a washing object therein. Although not illustrated in the drawing, the dryer 100 may further include a user operating unit (not shown) that receives at least one piece of drying information input by a user. The user may select the drying information, for example, a desired dryer operating course using the user operating unit. Additionally, the dryer 100 includes a controller (not shown) that generates an operating signal based on the drying information input using the user operating unit.

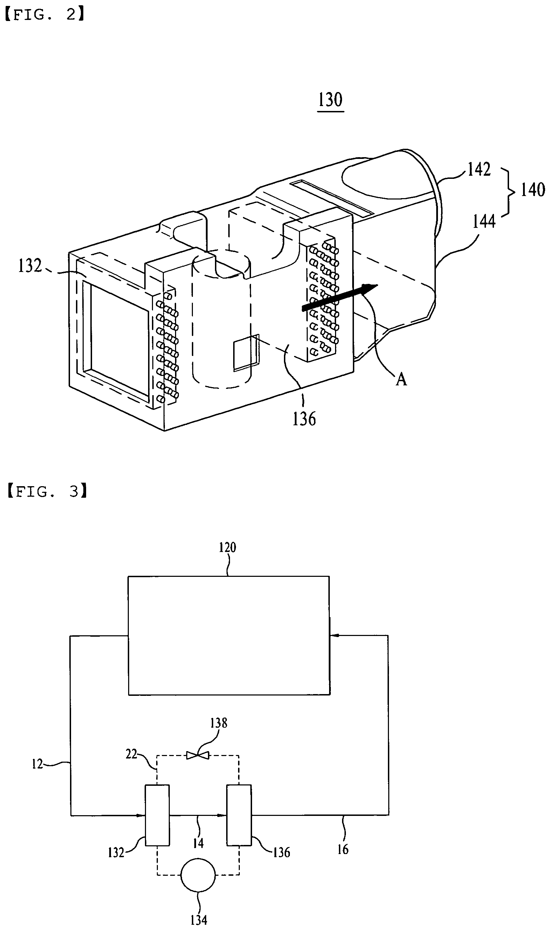

According to the embodiment, the dryer 100 may include a heating means for supplying dry air to dry the washing object within the drum 120. In the present embodiment, the dryer may include a heat pump 130 as the heating means. The heat pump 130 may include an evaporator 132, a compressor (134, see FIG. 3), a condenser 136, and an expansion valve (138, see FIG. 3), through all of which refrigerant circulates. The heat pump 130 may function to dehumidify and dry introduced outside air and to heat the air to a predetermined temperature. The heat pump 130 is driven upon receiving the operating signal of the controller.

Hereinafter, the heat pump 130 will be described in detail with reference to the drawings.

FIG. 2 is a perspective view illustrating the configuration of the heat pump 130 according to the embodiment.

Referring to FIG. 2, the heat pump 130 may include the evaporator 132 in which refrigerant is evaporated using latent heat of the introduced outside air, causing moisture in the air to be condensed, and the condenser 136 in which the refrigerant transmitted from the evaporator 132 acts to heat the air using the latent heat transferred therewith. In this way, the heat pump 130 according to the present embodiment may serve to supply heated dry air into the drum 120 by dehumidifying air using the evaporator 132 and heating the air to a predetermined temperature using the condenser 136.

In the dryer 100 according to the embodiment, although the above described constituent elements of the heat pump 130 may be individually mounted in a certain region of the cabinet 110, as shown in FIG. 1, it is preferable that a module type heat pump be detachably mounted in the cabinet 110. Through provision of the module type heat pump 130, the dryer according to the present embodiment may exhibit easier assembly and disassembly upon maintenance and repair. To this end, the heat pump 130 according to the present embodiment may include a case 140 defining the external appearance of the heat pump, the above described various constituent elements being mounted in the case.

The case 140 may include an upper case 142 and a lower case 144, and the above described various constituent elements may be mounted in the lower case 144. The upper case 142 may be separably coupled to the lower case 144. This configuration may ensure easier installation and repair of the various constituent elements within the case 140.

Once air is introduced into the case 140, the evaporator 132 condenses moisture contained in the air, thereby drying the air. More specifically, as refrigerant within a refrigerant pipe of the evaporator 132 is evaporated using heat of the air moving around the evaporator 132, moisture in the air having lost the heat is condensed, and the air from which the moisture is removed is changed into dry air.

Preferably, a condensed water storage unit (not shown) may be further provided to collect the condensed water from the evaporator 132. For example, a water collecting container (not shown) for storing the condensed water may be provided below the evaporator 132. The water collecting container may be connected to the condensed water storage unit located adjacent to the evaporator 132 through a pipe, etc. In this way, the condensed water generated in the evaporator 132 may first be collected in the water collecting container, and then be transmitted to and collected in the condensed water storage unit through the pipe. The condensed water collected in the condensed water storage unit may be discharged to the outside of the cabinet 120 through a drain pipe, or the condensed water storage unit may be detachably mounted to the cabinet 110 to assist a user in detaching the condensed water storage unit to dispose of the condensed water.

Meanwhile, while moisture in the air is being condensed to generate dry air in the evaporator 132, latent heat may be accumulated in the refrigerant within the evaporator 132. That is, simultaneously with condensation of moisture in the air, the refrigerant within the evaporator 132 is evaporated and accumulates latent heat. The latent heat accumulated in the refrigerant is transferred to the condenser 136 that will be described hereinafter, thereby being used to heat the air.

The condenser 136 according to the present embodiment is connected to the evaporator 132 and the compressor 134 through refrigerant pipes (not shown). Accordingly, the refrigerant, in which the latent heat has been accumulated in the evaporator 132, is supplied to the compressor 134 and the condenser 136 through the refrigerant pipes. In the condenser 136, the refrigerant radiates the latent heat while being condensed, thereby acting to heat the air moving around the condenser 136 to a predetermined temperature. In short, the evaporator 132 serves to dry air by condensing moisture contained in the air and to transfer latent heat generated during condensation of moisture to the condenser 136 by means of refrigerant, and the condenser 136 serves to heat the air using the latent heat radiated via condensation of the refrigerant.

In the present embodiment, a single air flow-path A through which air flows may be defined along the evaporator 132 and the condenser 136. Thus, when air is introduced into the heat pump 130, the air is dried as moisture contained in the air is condensed while passing through the evaporator 132, and after passing through the compressor 134, is heated while passing through the condenser 136, thereby being finally supplied into the drum 120. Through provision of the single air flow-path A, the heated dry air is supplied into the drum 120, contributing to further enhancement in drying effects. This is because achieving enhanced drying effects may require not only supply of high temperature air, but also supply of dry air.

Although the shape of the air flow-path A through which air flows is not particularly limited, the air flow-path A may have a linear shape in consideration of the fact that the heat pump 130 is mounted within the cabinet 110. To this end, the evaporator 132 and the condenser 136 of the heat pump 130 may be aligned along the air flow-path A. This alignment may minimize the volume of the heat pump 130 and may ensure easier assembly and disassembly of the heat pump. Meanwhile, a fan (not shown) may be further mounted in the case 132 to assist the air in smoothly flowing through the air flow-path A.

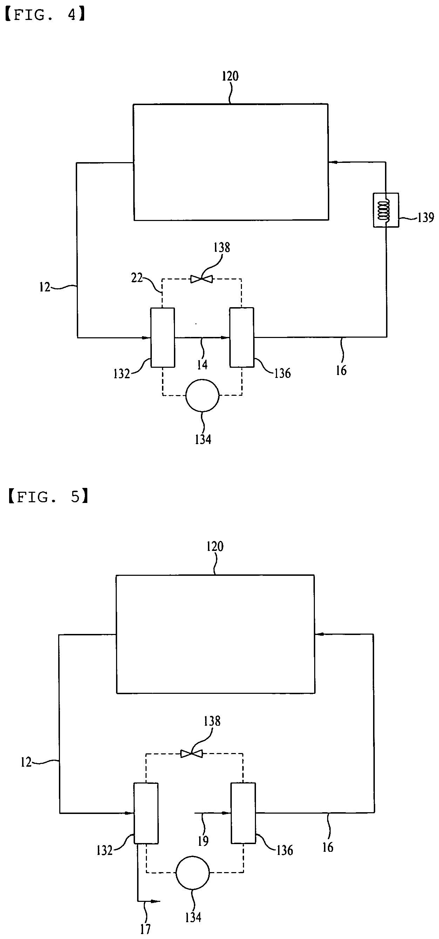

As described above, although the present embodiment describes the air flow-path under the assumption that the heat pump 130 includes the case 140, if the constituent elements of the heat pump 130 are respectively mounted in a certain region of the cabinet 110 rather than being accommodated in the case 140, for example, additional ducts may be provided to guide introduction of outside air into the evaporator 132 and the condenser 136. Meanwhile, in the case in which the heat pump 130 serves to dry and heat air and supply the heated dry air into the drum 120, the condenser 136 takes charge of heating the air. Therefore, the temperature of the resulting air may be lowered as compared to a conventional dryer that employs a heater. For this reason, in the present embodiment, a heater (139, see FIG. 4) may be further provided at a distal end of the case 140 or at a position in front of the drum 120 so as to heat the air before the air is introduced into the drum.

Additionally, although the present embodiment describes the configuration in which the single flow-path A is defined along the evaporator 132 and the condenser 136 of the heat pump 130, separate air flow-paths may be allotted respectively to the evaporator and the condenser. That is, air introduced into the evaporator 132 is dried as moisture contained in the air is condensed, and thereafter is discharged to the outside of the heat pump 130 in a state of losing latent heat to refrigerant. Here, the latent heat is transferred to the condenser 136 by the refrigerant, and is used to heat air introduced into the condenser 136 through a separate air flow-path so as to ensure supply of the heated dry air into the drum 120.

Meanwhile, the dryer may be classified into a circulation type dryer using air circulating within the drum, and an exhaust type dry using air discharged from the drum. Hereinafter, the circulation type and exhaust type dryers having the heat pump will be described.

FIG. 3 is a diagrammatic view illustrating the configuration of the circulation type dryer having the heat pump.

Referring to FIG. 3, air discharged from the drum 120 is supplied into the evaporator 132 through a first air flow-path 12, such that moisture contained in the air is condensed by the evaporator 132. Subsequently, the resulting air is directed into the condenser 136 through a second air flow-path 14, such that the air is heated to a predetermined temperature by the condenser 136. The air having passed through the condenser 136 is again supplied into the drum 120 through a third air flow-path 16. Meanwhile, the evaporator 132 and the condenser 136 are connected to the compressor 134 and the expansion valve 138 through a refrigerant line 22. The configuration and operation of the heat pump have already been described above, and thus a repeated description thereof will be omitted hereinafter.

FIG. 4 illustrates another embodiment of the circulation type dryer. As compared to the embodiment of FIG. 3, the present embodiment has a difference in that the air having passed through the heat pump is additionally heated by the heater 139 prior to being introduced into the drum. The following description is centered on this difference.

Referring to FIG. 4, the air discharged from the condenser 136 flows through the third air flow-path 136 and is supplied into the drum 120 by way of the heater 139. The heater 139 serves to reheat the air flowing through the third air flow-path 16. Here, the term "reheat" means that the air is primarily heated in the condenser 136 and is secondarily heated by the heater 139.

The heater 139 may be a gas burner or an electric heater, although the present invention is not limited thereto. Through provision of the heater, as the air, which has been heated and dried by the condenser 136 of the heat pump 130, is again heated by the heater, it is possible to supply air having a desired temperature into the drum 120. Accordingly, as the air is preheated using the condenser 136, and then is reheated using the heater, it is possible to remarkably reduce load applied to the heater. That is, the heater may heat the air to a desired temperature using less electric energy as compared to the related art, and moreover, heating using a smaller size heater may become possible.

FIG. 5 is a diagrammatic view illustrating the configuration of the exhaust type dryer having the heat pump. As compared to the embodiment of FIG. 3, the present embodiment has a difference in terms of the air flow-path of the evaporator and the condenser. The following description is centered on this difference.

Referring to FIG. 5, the air having passed through the evaporator 132 is discharged to the outside of the dryer through a fourth air flow-path 17. That is, the air having passed through the evaporator 132 is exhausted to the outside of the dryer rather than being supplied into the condenser 136 as in the circulation type dryer. In this case, the air discharged from the drum 120 has a higher temperature than room-temperature air. Accordingly, when the air discharged from the drum 120 reaches the evaporator 132, heat is transferred from the air to the refrigerant within the evaporator 132, thereby allowing latent heat to be accumulated in the refrigerant. Then, the refrigerant is supplied into the condenser 136 through the refrigerant line 22, thereby acting to heat air in the condenser 136 using the latent heat. Meanwhile, the air to be supplied into the condenser 136 is directed through a fifth air flow-path 19. Here, the air directed through the fifth air flow-path 19 is not the air discharged from the drum 120, but the interior air of the dryer or outside air introduced into the dryer.

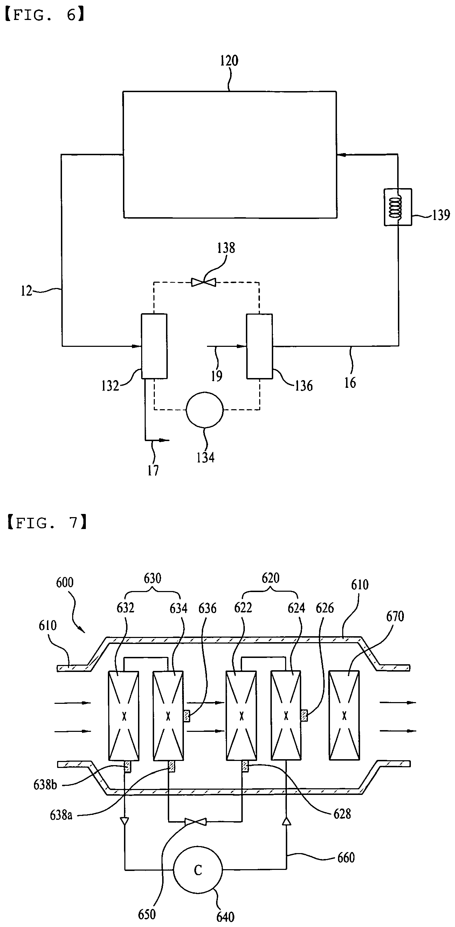

FIG. 6 illustrates another embodiment of the exhaust type dryer. As compared to the embodiment of FIG. 5, the present embodiment has a difference in that that the air having passed through the heat pump is additionally heated by the heater 139 prior to being introduced into the drum. The exhaust type dryer has been described above with reference to FIG. 5 and the heater has been described above with reference to FIG. 4, and thus a repeated description thereof will be omitted hereinafter.

The above embodiments describe the heat pump including the single evaporator and the single condenser. However, alternatively, there may be provided a heat pump including a plurality of evaporators 132 and a plurality of condensers 136.

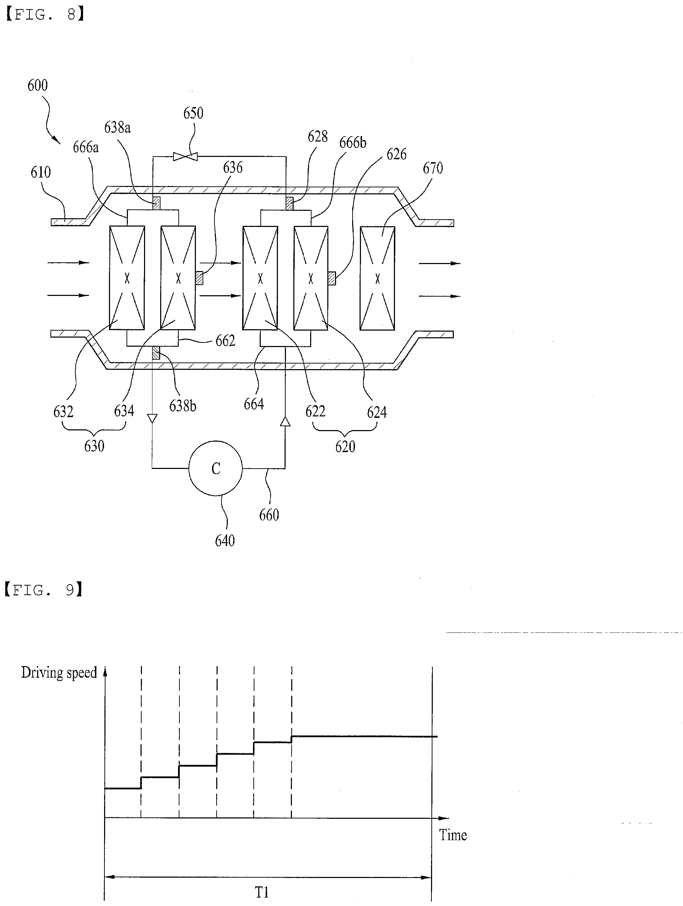

Hereinafter, the arrangement of the plurality of condensers 136 and the plurality of evaporators 132 will be described. FIGs. 7 and 8 are diagrammatic views illustrating a heat pump module including the plurality of condensers 136 and the plurality of evaporators 132.

Referring to FIG. 7, the number of the evaporators 132 and the condensers 136 may be changed according to installation environments, and for example, there may be provided two evaporators and two condensers. Hereinafter, this arrangement including the two evaporators 132 and the two condensers 136 will be described by way of example.

In the present embodiment, the evaporators 132 include a first evaporator 132A and a second evaporator 132B. Similarly, the condensers 136 include a first condenser 136A and a second condenser 136B. The first evaporator 132A and the second evaporator 132B may be arranged adjacent to each other, and the first condenser 136A and the second condenser 136B may be arranged adjacent to each other. Also, the first and second evaporators and the first and second condensers may be arranged in a direction parallel to an air flow-path.

The first and second evaporators 132A and 132B and the first and second condensers 136A and 136B are connected to the compressor 134 via refrigerant pipes 660. Here, the first and second evaporators 132A and 132B, the first and second condensers 136A and 136B and the refrigerant pipes 660 may be connected to one another in parallel or in series.

In the case in which the first and second evaporators 132A and 132B and the first and second condensers 136A and 136B are connected to one another in series, the refrigerant pipe 660 is connected from the compressor 134 to the first evaporator 132A, and the first evaporator 132A and the second evaporator 132B are connected to each other via a separate pipe. The refrigerant pipe 660 is connected from the evaporator 132B to the expansion valve 138, and is also connected from the expansion valve 138 to the first condenser 136A. The first condenser 136A and the second condenser 136B are connected to each other via a separate pipe, and the refrigerant pipe 660 is connected from the second condenser 136B to the compressor 134.

Thus, the refrigerant supplied from the compressor 134 acts to heat air while passing through the first and second condensers 136A and 136B in sequence. Then, the refrigerant having passed through the first and second condensers 136A and 136B passes through the first and second evaporators 132A and 132B in sequence by way of the expansion valve 138, so as to cause moisture contained in the air to be condensed.

Although the above embodiment of FIG. 7 describes the first evaporator 132A and the second evaporator 132B as being connected to each other in series and the first condenser 136A and the second condenser 136B as being connected to each other in series, the first evaporator 132A and the second evaporator 132B may be connected to each other in parallel, and similarly the first condenser 136A and the second condenser 136B may be connected to each other in parallel. FIG. 8 illustrates the configuration in which the plurality of evaporators and the condensers are connected to one another in parallel. The following description is centered on a difference with FIG. 7.

Referring to FIG. 8, in the case in which the first and second evaporators 132A and 132B and the first and second condensers 136A and 136B are connected to one another in parallel, the refrigerant pipe 660 connected from the compressor 134 to the first evaporator 132A and the second evaporator 132B and the refrigerant pipe 660 connected from the compressor 134 to the first condenser 136A and the second condenser 136B may be additionally provided with branch pipes (662 and 664, see FIG. 8). Also, the refrigerant pipe 660 connected from the expansion valve 138 to the first evaporator 132A and the second evaporator 132B and the refrigerant pipe 660 connected from the expansion valve 138 to the first condenser 136A and the second condenser 136B may be additionally provided with branch pipes (666a and 666b, see FIG. 8).

The branch pipe 662 is coupled to a distal end of the refrigerant pipe 660 that connects the compressor 134 to the first and second evaporators 132A and 132B such that the refrigerant is supplied into both the first evaporator 132A and the second evaporator 132B through the branch pipe 662. Also, the branch pipe 664 is coupled to a distal end of the refrigerant pipe 660 that connects the compressor 134 to the first and second condensers 136A and 136B such that the refrigerant having passed through the first condenser 136A and the second condenser 136B is supplied into the compressor 134 through the branch pipe 664.

In this way, the refrigerant supplied from the compressor 134 acts to condense moisture contained in the air while passing equally through the first and second evaporators 132A and 132B, and also acts to heat the air while passing equally through the first and second condensers 136A and 136B.

Referring again to FIGs. 7 and 8, as wet air discharged from the drum 120 passes through the first evaporator 132A and the second evaporator 132B in sequence, moisture contained in the air is condensed and removed. Thereby, the wet air is changed into dry air. Also, the dry air discharged from the evaporator 132 is heated while passing through the first condenser 136A and the second condenser 136B in sequence. Thereafter, the high temperature dry air having passed through the second condenser 136B is again introduced into the drum 120. Although FIGs. 7 and 8 illustrate only the configuration of the circulation type dryer, it will be clearly understood that the above description may also be applied to the exhaust type dryer. In the case of the exhaust type dryer, the evaporator and the condenser employed in the above described configuration of FIGs. 5 and 6 may be replaced by the plurality of evaporators and the condensers as illustrated in FIGs. 7 and 8.

The dryer 100 according to the embodiment of the present invention has the effect of increasing condensation efficiency as a result of the wet air discharged from the drum 120 passing through the first evaporator 132A and the second evaporator 132B in sequence. That is, by allowing the wet air to pass through the first and second evaporators 132A and 132B, a contact area and contact time between the wet air and the refrigerant lines of the first and second evaporators 132A and 132B are increased, which may maximize condensation efficiency of moisture contained in the wet air.

In addition, as a result of the air passing through the first condenser 136A and the second condenser 136B in sequence, heating efficiency may be increased. That is, by allowing the air to pass through the first and second condensers 136A and 136B, a contact area and contact time between the dry air and the refrigerant lines of the first and second condensers 136A and 136B are increased, which may enable acquisition of higher temperature dry air than dry air having passed through the single condenser.

In this way, the high temperature dry air may be supplied into the drum 120 to undergo heat exchange with an object to be dried, resulting in enhanced heat exchange efficiency and reduced drying time.

Meanwhile, the compressor usable with the heat pump may be classified into a fixed compressor in which the driving speed of the compressor is fixed, and a variable compressor in which the driving speed of the compressor is adjustable. Here, the variable compressor may be defined as the compressor 134, the driving speed of which is selectively adjustable, rather than being defined as a type in which the driving speed hz is fixed during driving of the compressor 134. Accordingly, it is possible to reduce noise and vibration of the compressor 134 and prevent damage and breakage of the compressor by adjusting the driving speed of the compressor 134.

An important factor in the case of adjusting the driving speed of the above described variable compressor 134 includes information on the temperature of refrigerant. The information on the temperature of refrigerant may include at least one of the condensation temperature of refrigerant in the condenser 136, the evaporation temperature of refrigerant in the evaporator 132, the temperature of refrigerant discharged from the condenser 136, and the temperature of refrigerant introduced into or discharged from the evaporator 132. That is, the controller (not shown) of the dryer 100 may control the driving speed of the compressor 134 based on the information on the temperature of refrigerant as described above.

Hereinafter, a configuration for sensing the temperature of the heat pump will be described in detail.

As shown in FIGs. 7 and 8, the heat pump may include the evaporator 132, the compressor 134, the condenser 136, and the expansion valve 138, which are connected to one another via the refrigerant pipes 660. A clothes treatment apparatus according to the present embodiment may include at least one temperature sensor for sensing the above described temperature information. When it is desired to sense the temperature of refrigerant discharged from the condenser 136 and the temperature of refrigerant introduced into or discharged from the evaporator 132 among the above described temperature information, temperature sensors 628, 638a, and 638b may be provided respectively at a refrigerant outlet of the condenser 136 and a refrigerant inlet and outlet of the evaporator 132. Also, when it is desired to additionally sense the temperature of refrigerant discharged from the compressor 134, a temperature sensor 642 may be further provided at an outlet of the compressor 134.

When sensing the temperature of refrigerant discharged from the condenser 136 and the temperature of refrigerant introduced into or discharged from the evaporator 132, positions of the temperature sensors 628, 638a, 638b, and 642 do not have great effect on the sensing of temperature. However, when sensing the condensation temperature of refrigerant in the condenser 136 and the evaporation temperature of refrigerant in the evaporator 132, positions of the temperature sensors 628, 638a and 638b are important. That is, it is preferable that the temperature sensors 626 and 636 be provided at phase change positions of the refrigerant lines within the condenser 136 and the evaporator 132, in order to sense phase change temperatures of refrigerant in the condenser 136 and the evaporator 132.

Meanwhile, the evaporator 132 may include the first temperature sensor 636 to sense the phase change temperature of refrigerant in the evaporator 132, i.e. the evaporation temperature of refrigerant. The first temperature sensor 636 may be located at a predetermined position suitable to sense the phase change temperature of refrigerant within the evaporator 132. For example, the first temperature sensor may be located approximately at the center of the refrigerant line placed within the evaporator 132, i.e. in the vicinity of the longitudinal center position of the refrigerant line. This is because phase change of refrigerant may occur in the vicinity of the longitudinal center position of the refrigerant line within the evaporator 132. If the phase change of refrigerant occurs at a position of the refrigerant line deviated towards the refrigerant inlet or outlet of the evaporator 132, the refrigerant may undergo insufficient heat exchange with air, which results in deterioration in the efficiency of the heat pump. In conclusion, the phase change of refrigerant may occur at the longitudinal center of the refrigerant line within the evaporator 132, and the first temperature sensor 636 to sense the phase change temperature may be located in the vicinity of the longitudinal center of the refrigerant line within the evaporator 132.

The condenser 136 may include the second temperature sensor 626 to sense the phase change temperature of refrigerant in the condenser 136, i.e. the condensation temperature of refrigerant. The second temperature sensor 626 may be located at a predetermined position suitable to sense the phase change temperature of refrigerant within the condenser 136. For example, the second temperature sensor may be located approximately at the center of the refrigerant line placed within the condenser 136, i.e. in the vicinity of the longitudinal center position of the refrigerant line. This is because the phase change of refrigerant may occur in the vicinity of the longitudinal center position of the refrigerant line within the condenser 136. If the phase change of refrigerant occurs at a position of the refrigerant line deviated towards the refrigerant inlet or outlet of the condenser 136, the refrigerant may undergo insufficient heat exchange with air, which results in deterioration in the efficiency of the heat pump. In conclusion, the phase change of refrigerant may occur at the longitudinal center of the refrigerant line within the condenser 136, and the second temperature sensor 626 to sense the phase change temperature may be located in the vicinity of the longitudinal center of the refrigerant line within the condenser 136.

In general, the evaporator 132 and the condenser 136 respectively include the refrigerant line having a predetermined length, and a plurality of heat exchange fins (not shown) coupled to the refrigerant line to increase heat exchange efficiency. In this case, there is a risk of the center of the refrigerant line overlapping with the heat exchange fins, which makes it very difficult to install and fix the first and second temperature sensors 636 and 626.

For this reason, it is preferable that the first and second temperature sensors 636 and 626 be located on the refrigerant lines so as not to overlap with the heat exchange fins. That is, when the evaporator 132 and the condenser 136 respectively include the heat exchange fins and the refrigerant line penetrating the heat exchange fins, each of the first and second temperature sensors 626 and 636 may be installed to an exposed portion of the refrigerant line not overlapping with the heat exchange fins. Even in this case, it is preferable that the first and second temperature sensors 636 and 626 be located at positions close to the center of the refrigerant line.

Meanwhile, in the case of the dryer 100 according to the above described embodiment, the heat pump 130 serves to heat and dehumidify air, and includes the compressor 134. However, when the dryer begins to be driven and the heat pump 130 is initially driven, liquid phase refrigerant may be introduced into the compressor 134 as the refrigerant within the evaporator 132 does not undergo sufficient heat exchange with air and fails to completely evaporate. When the liquid phase refrigerant is introduced into the compressor as described above, this may cause malfunction and damage to the compressor. Therefore, the dryer including the compressor requires a control method for preventing damage to the compressor during initial driving of the compressor. Hereinafter, the control method according to the embodiment will be described in detail with reference to the drawings.

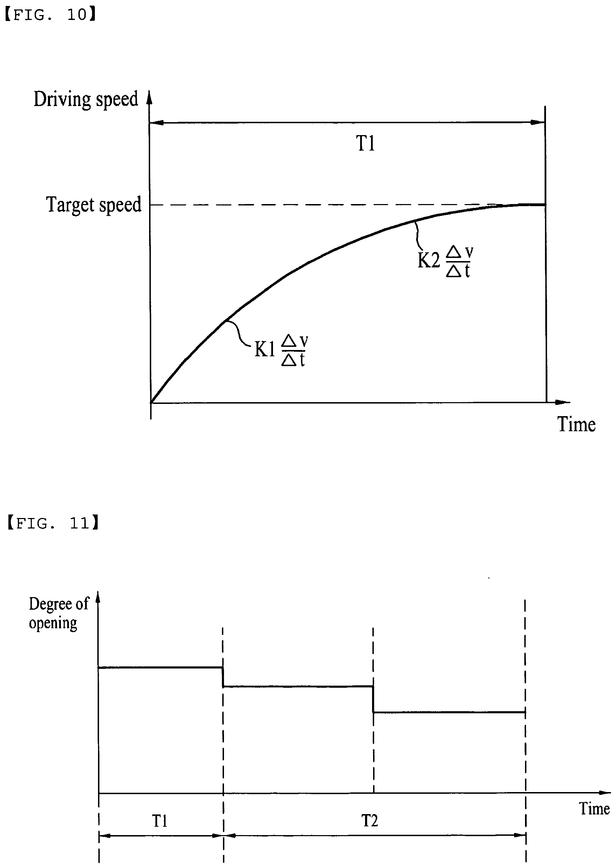

FIGs. 9 to 11 are graphs illustrating the control method of the dryer according to the embodiment. FIGs. 9 and 10 are graphs illustrating variation in the driving speed of the compressor depending on time, and FIG. 11 is a graph illustrating variation in the degree of opening of the expansion valve depending on time. In FIGs. 9 and 10, the horizontal axis of the graph represents time t, and the vertical axis represents the driving speed of the compressor. In FIG. 11, the horizontal axis of the graph represents time t, and the vertical axis represents the degree of opening of the expansion valve.

Referring to FIG. 9, the control method according to the embodiment may include raising the driving speed of the compressor to a target speed, and adjusting the degree of opening of the expansion valve. That is, the dryer to which the control method according to the present invention that will be described hereinafter is applied may be a dryer having a variable compressor, the driving speed of which is adjustable. Also, when the dryer includes the expansion valve, for example, the expansion valve may be a Linear Expansion Valve (LEV), the degree of opening of which is adjustable. Accordingly, the above described problem, i.e. introduction of liquid phase refrigerant into the compressor may be prevented by adjusting the driving speed of the compressor and/or the degree of opening of the expansion valve. This will be described in detail hereinafter.

The operation of raising the driving speed of the compressor to the target speed may be progressed for a first time zone T1. The first time zone T1 may begin simultaneously with driving of the compressor as the heat pump is driven. The heat pump of the dryer may be driven according to a selected dryer operating course. Accordingly, the control method according to the embodiment may include selecting at least one dryer operating course for supplying air or dry air, prior to the operation of raising the driving speed of the compressor.

In operation of the compressor, if the driving speed of the compressor is rapidly raised from the beginning, liquid phase refrigerant may be introduced into the compressor as described above. Accordingly, in the present embodiment, the driving speed of the compressor, as shown in FIG. 9, may be raised to the target speed in stages. That is, the driving speed of the compressor may be raised by a predetermined speed in stages, rather than being instantly raised to the target speed. This may prevent liquid phase refrigerant from being introduced into the compressor.

Although FIG. 9 illustrates only the embodiment in which the driving speed of the compressor is raised in stages, in the control method according to another embodiment, the driving speed of the compressor may be successively raised. FIG. 10 illustrates the embodiment in which the driving speed of the compressor is successively raised.

Referring to FIG. 10, the driving speed of the compressor may be successively raised to the target speed along a predetermined curve. In this case, when dividing the above described first time zone T1 into a front half part and a rear half part, the predetermined curve may be set such that a gradient k1 thereof in the front half part is greater than a gradient k2 thereof in the rear half part. That is, the driving speed of the compressor may be raised by a relatively greater speed during the front half part of the first time zone, and may be raised by a relatively smaller speed so as to approximately correspond to the target speed during the rear half part.

While the driving speed of the compressor is raised for the first time zone as described above, the expansion valve is kept at the maximum opening degree. If the expansion valve is closed to some extent rather than being opened to the maximum extent during initial driving of the compressor, the supply quantity of refrigerant is reduced from the beginning, which may prevent efficient condensation of moisture in air as well as efficient heating of the air using the refrigerant, resulting in deterioration in the performance of the heat pump. Accordingly, in the present embodiment, the expansion valve is kept at the maximum opening degree for the first time zone, and in such a state, the driving speed of the compressor is adjusted, so as to prevent liquid phase refrigerant from being introduced into the compressor.

Next to the above described first time zone T1, the expansion valve may be adjusted and closed for a second time zone T2. The second time zone T2 may be consecutive to the above described first time zone T1, or the second time zone T2 and the above described first time zone T1 may partially overlap. For the second time zone T2, the degree of opening of the expansion valve may be reduced in stages, or may be successively reduced. This serves to maintain stability of the compressor when the driving speed of the compressor reaches the target speed.

More specifically, when the driving speed of the compressor reaches the target speed, and thus the compressor is operated at the target speed, the compressor may experience an abnormal increase in temperature. If the temperature of the compressor is raised beyond a predetermined value, this may cause malfunction and damage to the compressor. Therefore, to realize stable operation of the compressor, the degree of opening of the expansion valve may be adjusted to reduce the flow rate of refrigerant, which may prevent an excessive increase in the temperature of the compressor.

Accordingly, the controller may close the expansion valve in stages based on at least one piece of temperature information related to the heat pump. Here, the at least one piece of temperature information related to the heat pump may include the temperature of refrigerant circulating through the heat pump, and the temperatures of the evaporator, the compressor, and the condenser constituting the heat pump. For example, the at least one piece of temperature information may include at least one of the temperature of the compressor, the temperature of refrigerant introduced into the compressor, the temperature of refrigerant discharged from the compressor, and the surrounding temperature of the compressor. The temperature information may be obtained from the above described various kinds of temperature sensors of FIGs. 7 and 8. In this way, when it is judged based on the sensed temperature information related to the compressor that the temperature of the compressor is increased beyond a predetermined value, the degree of opening of the expansion valve may be controlled in stages.

It is assumed that the above described first and second time zones are consecutive to each other rather than overlapping each other. In this case, for the first time zone, the controller may control the expansion valve so as to be opened to the maximum extent and may adjust the driving speed of the compressor to the target speed. Subsequently, for the second time zone, the controller may maintain the driving speed of the compressor at the target speed and may adjust the degree of opening of the expansion vale, for the sake of stable operation of the compressor.

It is also assumed that the second time zone T2 and the first time zone T1 partially overlap each other as described above. For example, if the temperature of the compressor is raised abnormally for the first time zone, it is necessary to adjust the degree of opening of the expansion valve even for the first time zone. Accordingly, in this case, the control method may further include, next to the operation of opening the expansion valve to the maximum extent, adjusting the degree of opening of the expansion valve for the first time zone T1. That is, since the operation of adjusting the degree of opening of the expansion valve is within the second time zone according to the above description, it can be said that the operation of adjusting the driving speed of the compressor and the degree of opening of the expansion valve simultaneously is implemented for a partially overlapped time zone of the first time zone and the second time zone. However, even in the case in which the degree of opening of the expansion valve is adjusted for the first time zone T1, it is preferable to adjust the degree of opening of the expansion valve and close the expansion valve after a predetermined time has passed from the beginning of the first time zone, in order to prevent deterioration in the performance of the heat pump.

As occasion demands, it may be impossible to prevent an increase in the temperature of the compressor even if the degree of opening of the expansion valve is adjusted for the second time zone. In this case, it is necessary to adjust the driving speed of the compressor for the second time zone. That is, the driving speed of the compressor may be adjusted for the second time zone rather than being maintained at the target speed, and for example, may be reduced. Even in this case, since the operation of adjusting the driving speed of the compressor is within the first time zone according to the above description, it can be said that the operation of adjusting the driving speed of the compressor and the degree of opening of the expansion valve simultaneously is implemented for the partially overlapped time zone of the first time zone and the second time zone.

Meanwhile, through provision of the above described heat pump 130, although it is possible to heat and dehumidify air using a single device, this may cause greater noise and vibration as compared to a conventional dryer including a gas burner or an electric heater. That is, noise and vibration generated during driving of the compressor 134 of the heat pump 130 may increase noise and vibration of the dryer. The increased noise and vibration may be displeasing to a user. In particular, excessive noise and vibration may cause the user to avoid using the dryer at night. For this reason, reducing driving vibration and noise of the compressor is necessary to reduce noise and vibration of the dryer.

To this end, as described above, the heat pump may include the variable compressor. Thus, the user may reduce noise and vibration by adjusting, for example, the driving speed of the compressor according to a selected dryer operating course or when driving the dryer at night. Hereinafter, a method for controlling the dryer having the variable compressor to reduce noise and vibration will be described in more detail.

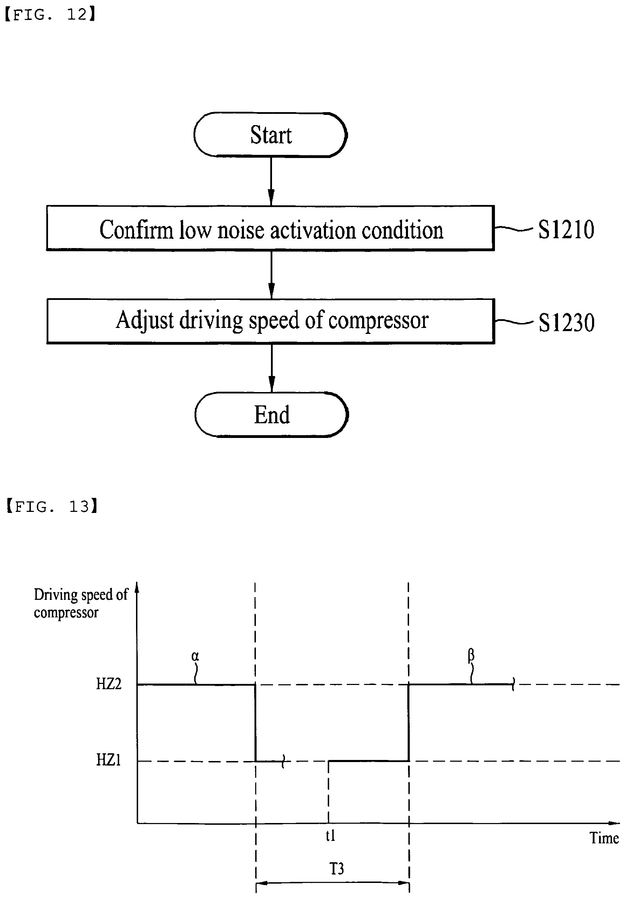

FIG. 12 is a flowchart illustrating a control method of a dryer according to another embodiment.

Referring to FIG. 12, the control method of the dryer may basically include confirming a low noise activation condition of the dryer (S1210), and adjusting the driving speed of the variable compressor based on the activation condition (S1230).

First, when the user selects one of dryer operating courses, the controller of the dryer may confirm the 'low noise activation condition' of the dryer (S1210). That is, the controller may confirm the low noise activation condition when the user selects the dryer operating course or during implementation of the selected dryer operating course. The 'low noise activation condition' means a condition in which noise is set to be lower than in a standard course (or a normal course) during driving of the dryer. This condition may be set by the user, or may be automatically set by the controller. This will be described hereinafter.

Here, the activation condition of the dryer may correspond to the activation condition of the heat pump, and more accurately, may correspond to the activation condition of the compressor. The low noise activation condition may be input manually by the user, or may be automatically input by the controller. For example, when it is desired to reduce noise and vibration of the dryer, the user may manually input the low noise activation condition by selecting a so-called 'low vibration and/or low noise operating course'. Alternatively, when it is essential to reduce noise and vibration of the dryer down to a predetermined value, for example, at night, the controller may automatically input the low noise activation condition by confirming a driving time zone of the dryer.

To enable that the user manually inputs the low noise activation condition, the dryer may include a low vibration and/or low noise operating course, or the dryer may include a so-called 'low noise function' that is additionally selected after selection of the dryer operating course. In this way, the low noise activation condition may be input as the user selects the low vibration and/or low noise operating course, or selects a certain operation mode, such as the 'low noise function'.

On the other hand, when the low noise activation condition is automatically input by the controller, the controller may store a previously input time zone (hereinafter, referred to as 'low noise time zone') in which the low noise activation condition is set. For example, a time zone from 10PM to 7AM may be set as the low noise time zone. Thus, the controller may automatically input the low noise activation condition if the driving time zone of the dryer is within the low noise time zone. Here, the low noise time zone is previously input and stored in the dryer before the release of the product. Also, the low noise time zone may be appropriately adjusted by the user as necessary.

Considering the case in which the driving time zone of the dryer is within the low noise time zone, the driving time zone may wholly or partially overlap with the low noise time zone. In the former case in which the driving time zone wholly overlaps with the low noise time zone, the controller may automatically input the low noise activation condition.

On the other hand, if the driving time zone partially overlaps with the low noise time zone, the activation condition may be differently set according to the partially overlapped time zone. For example, if the driving time zone of the compressor is within the driving time zone of the dryer overlapping with the low noise time zone, similarly, the controller may set the low noise activation condition. However, if the driving time zone of the compressor is not within the driving time zone of the dryer overlapping with the low noise time zone, the controller may do not set the low noise activation condition. That is, the controller may set the low noise activation condition only when the driving time zone of the compressor is within the low noise time zone. This is because driving noise of the compressor has the greatest effect on noise of the dryer.

FIG. 13 illustrates the case in which the driving time zone of the compressor partially overlaps with the low noise time zone during driving of the dryer.

Referring to FIG. 13, the case α in which the compressor begins to be driven at time that is not within a low noise time zone T3, and then enters the low noise time zone T3 may occur. In this case, the compressor is driven at a first speed (normal speed, Hz1) for a time zone that is not within the low noise time zone T3, and then is driven at a lower second speed Hz2 after entering the low noise time zone T3. On the other hand, the case β in which the compressor begins to be driven at time t1 that is within the low noise time zone T3, and then exits from the low noise time zone T3 may occur. In this case, the compressor is driven at the second speed Hz2 for a time zone that is within the low noise time zone T3, and then the driving speed of the compressor is adjusted to the first speed (normal speed, Hz1) after exiting from the low noise time zone T3.

After confirming the low noise activation condition of the dryer, the controller may adjust the driving speed of the variable compressor based on the activation condition (S1230).

Since the driving speed of the compressor is adjusted to reduce driving noise and vibration of the compressor, the controller may control noise and vibration by reducing the driving speed of the compressor. In this case, the driving speed of the compressor when the dryer is driven according to a so-called 'standard' course (or normal course) in the daytime is defined as the normal speed Hz1. Based on the definition of the driving speed, the controller may operate the compressor at the lower driving speed Hz2 than the normal speed when the low noise activation condition is set. For example, the controller may drive the compressor at a speed that is approximately 40 to 60% that of the normal speed.

The controller may drive the compressor such that driving noise of the compressor is a predetermined db or less when the low noise activation condition is set. For example, the controller may adjust the driving speed of the controller so as to be less than approximately 40 to 60 db when the low noise activation condition is set.

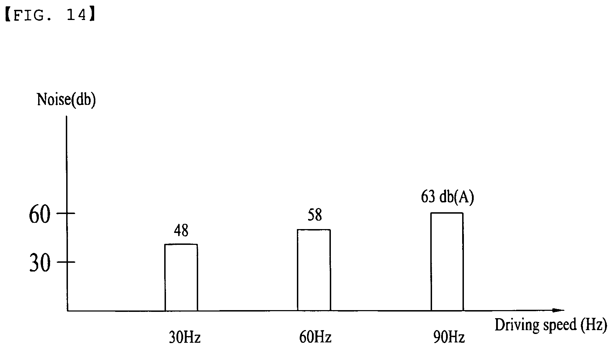

FIG. 14 is a graph illustrating noise distribution depending on the driving speed of the compressor. In FIG. 14, the horizontal axis of the graph represents the driving speed hz of the compressor, and the vertical axis represents the noise db of the compressor.

Referring to FIG. 4, when the driving speed of the compressor is approximately 90 hz, noise of the compressor is approximately 63 db. When the driving speed of the compressor is reduced to approximately 30 hz, noise is approximately 48 db. For example, assuming that the normal speed Hz1 of the compressor is approximately 90hz, if the user does not input the low noise activation condition or the low noise activation condition is not automatically input by the controller, the compressor is driven at the normal speed.

On the other hand, if the user inputs the low noise activation condition, or the low noise activation condition is automatically input by the controller, the compressor may be operated at the second speed Hz2, for example, at 30 hz, in order to reduce noise. In this case, as described above, the compressor may be driven at a lower speed than the normal speed, or may be driven such that noise of the compressor is less than a predetermined value.

Although the above described embodiments have been described only in relation to the dryer, of course, the control method according to the above described embodiments may be applied to a washing machine having a drying function, and may be applied to a clothes treatment apparatus for drying clothes using a heat pump.

## Claims

1. A control method of a circulation type or an exhaust type dryer comprising a heat pump (130) including a variable velocity type compressor (134), the control method comprising steps of:
- raising the driving speed of the compressor (134) to a target speed for a first time zone (T1); and
- adjusting an open degree of an expansion valve (138) provided in the heat pump (130), **characterized in that** therein the open degree of the expansion valve (138) is maintained at a maximum value for the first time zone (T1).

2. The control method of the dryer as claimed in claim 1, further comprising steps of:
- closing the expansion valve (138) by adjusting the open degree of the expansion valve for a second time zone (T2).

3. The control method of the dryer as claimed in claim 2, wherein the expansion valve (138) is closed by adjusting the open degree of the expansion valve a predetermined time after the first time zone starts.

4. The control method of the dryer as claimed in claim 1, wherein the raising of the driving speed of the compressor (134) is gradually or serially increased for the first time zone (T1).

5. The control method of the dryer as claimed in claim 4, wherein the raising of the driving speed of the compressor (134) is serially increased along a predetermined curvature.

6. The control method of the dryer as claimed in claim 5, wherein a slope (K1) of the curvature in a first half of the first time zone (T1) is larger than a slope (K2) of the curvature in a second half of the first time zone (T1).

7. The control method of the dryer as claimed in claim 1, wherein the step of adjusting the open degree of the expansion valve (138) is performed for a second time zone (T2).

8. The control method of the dryer as claimed in claim 7, wherein the expansion valve (138) is closed, preferably gradually, based on at least one piece of temperature information relating to the heat pump (130).

9. The control method of the dryer as claimed in claim 8,
wherein the temperature information relating to the heat pump (130) comprises at least one of a temperature of a refrigerant circulating the heat pump (130) and a temperature of an evaporator (132), a temperature of the compressor (134) and a temperature of a condenser (136) which are provided in the heat pump (130), and/or
wherein the expansion valve (138) is closed gradually when the at least one piece of the temperature information relating to the heat pump (130) is increased to a preset value or more.

10. The control method of the dryer as claimed in claim 7,
wherein the raising of the driving speed of the compressor (134) is maintained to be the target velocity for the second time zone (T2), or
wherein the raising of the driving speed of the compressor (134) is adjusted for the second time zone (T2).

11. The control method of the dryer as claimed in claim 1, further comprising steps of:
- identifying (S1210) a low noisy activation condition of the dryer while a selected course is implemented; and
- adjusting (S1230) the raising of the driving speed of the compressor (134) based on the low noisy activation condition.

12. The control method of the dryer as claimed in claim 11, wherein the low noisy activation condition of the dryer is set
- manually or automatically,
- based on a user's selection or an activation time zone of the dryer,
- when the user selects a predetermined course or a predetermined mode,
- when an activation time band of the dryer belongs to a predetermined time zone, or
- when an activation time zone of a variable velocity type compressor provided in the dryer belongs to a predetermined time zone.

13. The control method of the dryer as claimed in claim 11, wherein the step (S1230) of adjusting the raising of the driving speed of the variable velocity type compressor (134) activates the variable velocity type compressor (134) at a predetermined velocity which
- is lower than a normal velocity of the compressor (134), or
- allows noise generated in the compressor (134) to be a preset reference value or lower.

14. A dryer comprising:
- a user operational part configured to receive at least one piece of drying information;
- a control unit configured to generate an operation signal based on the drying information input via the user operational part;
- a heat pump (130) activated based on the operation signal generated in the control unit, the heat pump (130) comprising a compressor (134) and an expansion valve (138), wherein an activation velocity of the compressor (134) is increased to a preset target velocity based on the operation signal for a first time zone (T1) and an open degree of the expansion valve (138) is adjusted based on the operation signal for a second time zone (T2) which is in a serial order with the first time zone (T1), acterized in that therein an open degree of the expansion valve (138) is maintained at a maximum value for the first time zone (T1).

## Patentansprüche

1. Verfahren zur Steuerung eines Trockners eines Zirkulationstyps oder eines Ablufttyps, umfassend eine Wärmepumpe (130), die einen Kompressor (134) des variablen Geschwindigkeitstyps aufweist, wobei das Steuerverfahren Schritte umfasst:
- Erhöhen der Antriebsgeschwindigkeit des Kompressors (134) auf eine Zielgeschwindigkeit für eine erste Zeitzone (T1); und
- Einstellen eines Öffnungsgrads eines Expensionsventils (138), das in der Wärmepumpe (130) bereitgestellt ist;
**dadurch gekennzeichnet, dass** darin:
der Öffnungsgrad des Expensionsventils (138) auf einem Maximalwert für die erste Zeitzone (T1) gehalten wird.

2. Steuerverfahren des Trockners nach Anspruch 1, ferner umfassend Schritte:
- Schließen des Expensionsventils (138) durch Einstellen des Öffnungsgrads des Expensionsventils für eine zweite Zeitzone (T2).

3. Steuerverfahren des Trockners nach Anspruch 2, wobei das Expensionsventil (138) durch Einstellen des Öffnungsgrads des Expensionsventils zu einer vorherbestimmten Zeit geschlossen wird, nachdem die erste Zeitzone beginnt.

4. Steuerverfahren des Trockners nach Anspruch 1, wobei das Erhöhen der Antriebsgeschwindigkeit des Kompressors (134) allmählich oder seriell für die erste Zeitzone (T1) gesteigert wird.

5. Steuerverfahren des Trockners nach Anspruch 4, wobei das Erhöhen der Antriebsgeschwindigkeit des Kompressors (134) seriell entlang einer vorherbestimmten Krümmung gesteigert wird.

6. Steuerverfahren des Trockners nach Anspruch 5, wobei eine Steilheit (K1) der Krümmung in einer ersten Hälfte der ersten Zeitzone (T1) größer ist als eine Steilheit (K2) der Krümmung in einer zweiten Hälfte der ersten Zeitzone (T1).

7. Steuerverfahren des Trockners nach Anspruch 1, wobei der Schritt des Einstellens des Öffnungsgrads des Expansionsventils (138) für eine zweite Zeitzone (T2) vorgenommen wird.

8. Steuerverfahren des Trockners nach Anspruch 7, wobei das Expansionsventil (138), vorzugsweise allmählich, auf der Basis mindestens eines Elements von Temperaturinformationen in Bezug auf die Wärmepumpe (130) geschlossen wird.

9. Steuerverfahren des Trockners nach Anspruch 8,
wobei die Temperaturinformationen in Bezug auf die Wärmepumpe (130) mindestens eine von einer Temperatur eines Kältemittels, das in der Wärmepumpe (130) zirkuliert, und einer Temperatur eines Verdampfers (132), einer Temperatur des Kompressors (134) und einer Temperatur eines Kondensators (136) umfasst, die in der Wärmepumpe (130) bereitgestellt sind, und/oder
wobei das Expansionsventil (138) allmählich geschlossen wird, wenn das mindestens eine Element der Temperaturinformationen in Bezug auf die Wärmepumpe (130) auf einen voreingestellten Wert oder mehr erhöht wird.

10. Steuerverfahren des Trockners nach Anspruch 7,
wobei das Erhöhen der Antriebsgeschwindigkeit des Kompressors (134) aufrechterhalten wird, um die Zielgeschwindigkeit für die zweite Zeitzone (T2) zu sein, oder
wobei das Erhöhen der Antriebsgeschwindigkeit des Kompressors (134) für die zweite Zeitzone (T2) eingestellt wird.

11. Steuerverfahren des Trockners nach Anspruch 1, ferner umfassend Schritte:
- Identifizieren (S1210) einer geräuscharmen Aktivierungsbedingung des Trockners, während ein ausgewählter Durchgang implementiert wird; und
- Einstellen (S1230) des Erhöhens der Antriebsgeschwindigkeit des Kompressors (134) auf der Basis der geräuscharmen Aktivierungsbedingung.

12. Steuerverfahren des Trockners nach Anspruch 11, wobei die geräuscharme Aktivierungsbedingung des Trockners eingestellt wird
- manuell oder automatisch,
- auf der Basis einer Bedienerauswahl oder einer Aktivierungszeitzone des Trockners,
- wenn der Bediener einen vorherbestimmten Durchgang oder einen vorherbestimmten Modus auswählt,
- wenn eine Aktivierungszeitband des Trockners zu einer vorherbestimmten Zeitzone gehört, oder
- wenn eine Aktivierungszone eines Kompressors des variablen Geschwindigkeitstyps, der in dem Trockner bereitgestellt ist, zu einer vorherbestimmten Zeitzone gehört.

13. Steuerverfahren des Trockners nach Anspruch 11, wobei der Schritt (S1230) des Einstellens des Erhöhens der Antriebsgeschwindigkeit des Kompressors (134) des variablen Geschwindigkeitstyps den Kompressor (134) des variablen Geschwindigkeitstyps mit einer vorherbestimmten Geschwindigkeit aktiviert, die
- niedriger ist als eine normale Geschwindigkeit des Kompressors (134), oder
- gestattet, dass Geräusche, die in dem Kompressor (134) erzeugt werden, ein voreingestellter Referenzwert oder weniger sind.

14. Trockner, umfassend:
- einen Bedienerbetriebsteil, der ausgelegt ist, mindestens ein Element von Trocknungsinformationen zu empfangen;
- eine Steuereinheit, die ausgelegt ist, ein Betriebssignal auf der Basis der Trocknungsinformationen zu generieren, die über den Bedienerbetriebsteil eingegeben werden;
- eine Wärmepumpe (130), die auf der Basis des Betriebssignals aktiviert wird, das in der Steuereinheit generiert wird, wobei die Wärmepumpe (130) einen Kompressor (134) und ein Expansionsventil (138) umfasst, wobei eine Aktivierungsgeschwindigkeit des Kompressors (134) auf eine voreingestellte Zielgeschwindigkeit auf der Basis des Betriebssignals für eine erste Zeitzone (T1) erhöht wird, und ein Öffnungsgrad des Expansionsventils (138) auf der Basis des Betriebssignals für eine zweite Zeitzone (T2) eingestellt wird, die in einer seriellen Reihenfolge mit der ersten Zeitzone (T1) ist,
**dadurch gekennzeichnet, dass** darin:
ein Öffnungsgrad des Expansionsventils (138) auf einem Maximalwert für die erste Zeitzone (T1) gehalten wird.

## Revendications

1. Procédé de commande d'un sèche-linge de type à circulation ou de type à évacuation comprenant une pompe à chaleur (130) comprenant un compresseur de type à vitesse variable (134), le procédé de commande comprenant les étapes de :
- l'augmentation de la vitesse d'entraînement du compresseur (134) à une vitesse cible pendant un premier créneau de temps (T1) ; et
- l'ajustement d'un degré d'ouverture d'une vanne d'expansion (138) prévue dans la pompe à chaleur (130),
**caractérisé en ce que**, à l'intérieur de celle-ci, le degré d'ouverture de la vanne d'expansion (138) est maintenu à une valeur maximale pendant le premier créneau de temps (T1).

2. Procédé de commande du sèche-linge selon la revendication 1, comprenant en outre les étapes de :
- la fermeture de la vanne d'expansion (138) par l'ajustement du degré d'ouverture de la vanne d'expansion pendant un deuxième créneau de temps (T2) .

3. Procédé de commande du sèche-linge selon la revendication 2, dans lequel la vanne d'expansion (138) est fermée par l'ajustement du degré d'ouverture de la vanne d'expansion à un temps prédéterminé après le début du premier créneau de temps.

4. Procédé de commande du sèche-linge selon la revendication 1, dans lequel l'augmentation de la vitesse d'entraînement du compresseur (134) est augmentée progressivement ou en série pendant le premier créneau de temps (T1).

5. Procédé de commande du sèche-linge selon la revendication 4, dans lequel l'augmentation de la vitesse d'entraînement du compresseur (134) est augmentée en série le long d'une courbe prédéterminée.

6. Procédé de commande du sèche-linge selon la revendication 5, dans lequel une pente (K1) de la courbe dans une première moitié du premier créneau de temps (T1) est supérieure à une pente (K2) de la courbe dans une deuxième moitié du premier créneau de temps (T1).

7. Procédé de commande du sèche-linge selon la revendication 1, dans lequel l'étape de l'ajustement du degré d'ouverture de la vanne d'expansion (138) est effectuée pendant un deuxième créneau de temps (T2).

8. Procédé de commande du sèche-linge selon la revendication 7, dans lequel la vanne d'expansion (138) est fermée, de préférence progressivement, sur la base d'au moins une information de température relative à la pompe à chaleur (130).

9. Procédé de commande du sèche-linge selon la revendication 8,
dans lequel l'information de température relative à la pompe à chaleur (130) comprend au moins l'une d'une température d'un frigorigène circulant dans la pompe à chaleur (130) et d'une température d'un évaporateur (132), d'une température du compresseur (134) et d'une température d'un condensateur (136) qui sont prévus dans la pompe à chaleur (130), et/ou
dans lequel la vanne d'expansion (138) est fermée progressivement lorsque l'au moins une information de température relative à la pompe à chaleur (130) est augmentée à une valeur préréglée ou plus.

10. Procédé de commande du sèche-linge selon la revendication 7,
dans lequel l'augmentation de la vitesse d'entraînement du compresseur (134) est maintenue à la vitesse cible pendant le deuxième créneau de temps (T2), ou
dans lequel l'augmentation de la vitesse d'entraînement du compresseur (134) est ajustée pendant le deuxième créneau de temps (T2).

11. Procédé de commande du sèche-linge selon la revendication 1, comprenant en outre les étapes de :
- l'identification (S1210) d'une condition d'activation à faible bruit du sèche-linge pendant qu'un cycle sélectionné est mis en oeuvre ; et
- l'ajustement (S1230) de l'augmentation de la vitesse d'entraînement du compresseur (134) sur la base de la condition d'activation à faible bruit.

12. Procédé de commande du sèche-linge selon la revendication 11, dans lequel la condition d'activation à faible bruit du sèche-linge est réglée
- manuellement ou automatiquement,
- sur la base d'une sélection d'utilisateur ou d'un créneau de temps d'activation du sèche-linge,
- lorsque l'utilisateur sélectionne un cycle prédéterminé ou un mode prédéterminé,
- lorsqu'une bande de temps d'activation du sèche-linge appartient à un créneau de temps prédéterminé, ou
- lorsqu'un créneau de temps d'activation d'un compresseur de type à vitesse variable prévu dans le sèche-linge appartient à un créneau de temps prédéterminé.

13. Procédé de commande du sèche-linge selon la revendication 11, dans lequel l'étape (S1230) de l'ajustement de l'augmentation de la vitesse d'entraînement du compresseur de type à vitesse variable (134) active le compresseur de type à vitesse variable (134) à une vitesse prédéterminée qui
- est inférieure à une vitesse normale du compresseur (134), ou
- permet qu'un bruit généré dans le compresseur (134) soit inférieur ou égal à une valeur de référence préréglée.

14. Sèche-linge comprenant :
- une partie opérationnelle d'utilisateur configurée pour recevoir au moins une information de séchage ;
- une unité de commande configurée pour générer un signal de fonctionnement sur la base de l'information de séchage entrée par l'intermédiaire de la partie opérationnelle d'utilisateur ;
- une pompe à chaleur (130) activée sur la base du signal de fonctionnement généré dans l'unité de commande, la pompe à chaleur (130) comprenant un compresseur (134) et une vanne d'expansion (138), dans lequel une vitesse d'activation du compresseur (134) est augmentée à une vitesse cible préréglée sur la base du signal de fonctionnement pendant un premier créneau de temps (T1) et un degré d'ouverture de la vanne d'expansion (138) est ajusté sur la base du signal de fonctionnement pendant un deuxième créneau de temps (T2) qui est dans un ordre en série avec le premier créneau de temps (T1), **caractérisé en ce que**, à l'intérieur de celle-ci, un degré d'ouverture de la vanne d'expansion (138) est maintenu à une valeur maximale pendant le premier créneau de temps (T1).
